# FASCICULE DE BREVET EUROPEEN

(11) **EP 3 233 552 B1**
(45) Date de publication et mention de la délivrance du brevet: **26.08.2020**
(21) Numéro de dépôt: 15805598.8
(22) Date de dépôt: 19.11.2015
(51) Int. Cl.: B60K 6/12, F16H 61/4096, F15B 1/26

(54) **VÉHICULE AUTOMOBILE HYBRIDE ÉQUIPÉ D'UN CIRCUIT HYDRAULIQUE COMPRENANT UN RESERVOIR TRES BASSE PRESSION MIS EN DEPRESSION**
HYBRIDES KRAFTFAHRZEUG UMFASSEND EINEN HYDRAULIKKREISLAUF MIT EINEM UNTERDRUCK AUSGESETZTEN RESERVOIR FÜR SEHR NIEDRIGEN DRUCK
HYBRID MOTOR VEHICLE WITH A HYDRAULIC CIRCUIT COMPRISING A VERY-LOW-PRESSURE RESERVOIR PLACED UNDER NEGATIVE PRESSURE

(30) Priorité: 17.12.2014 FR 1462639
(43) Date de publication de la demande: 25.10.2017
(73) Titulaire: Technoboost, 75116 Paris (FR)
(72) Inventeur: LE DREN, Arnaud, 91800 Brunoy (FR); YARCE, Andres, 9190 Meudon (FR); MAUREL, Stephane, 92130 Issy Les Moulineaux (FR)
(74) Mandataire: Fernandez, Francis Lionel
(86) Numéro de dépôt international: PCT/FR2015/053130
(87) Numéro de publication internationale: WO 2016/097512

(56) Documents cités:
- EP-A2- 0 802 329
- EP-B1- 2 406 502
- WO-A1-94/21891

## Description

La présente invention concerne un véhicule automobile hybride équipé d'un circuit hydraulique comprenant un réservoir très basse pression de stockage du fluide.

Un type de véhicule hybride connu, présenté notamment par le document FR-A1-3004999, comporte un circuit hydraulique comprenant une première machine hydraulique recevant le fluide d'un circuit basse pression équipé d'un accumulateur basse pression, pour générer une haute pression refoulée dans un accumulateur haute pression afin de stocker une énergie hydraulique.

La haute pression alimente une deuxième machine hydraulique travaillant en moteur, le fluide retournant ensuite vers le circuit basse pression.

D'une manière générale ce type de circuit hydraulique comprenant un circuit basse pression, utilisé dans l'industrie ou pour la traction de véhicules automobiles hybrides hydrauliques, comporte un dispositif de gavage puisant dans un réservoir très basse pression, généralement à la pression atmosphérique, recevant différents retours de fuites, pour alimenter le circuit basse pression à une pression minimum afin d'éviter une cavitation du fluide, notamment lors des débits importants dans la première machine hydraulique.

En effet la cavitation des machines hydrauliques pose des problèmes de bruits, et d'endommagement de composants internes.

Les pompes de gavage peuvent de manière connue être entraînées par différents moyens, comprenant en particulier un moteur électrique, ou une machine hydraulique alimentée par une pression du circuit hydraulique.

Les réservoirs très basse pression peuvent être à la pression atmosphérique, en présentant une ouverture vers l'extérieur. Avec ce type de réservoir à la pression atmosphérique, on facilite l'extraction des gaz dissous dans le fluide, ainsi que la purge du circuit.

Cependant ces réservoirs peuvent poser des problèmes de pollution du fluide intérieur par des entrées, notamment de particules extérieures, d'humidité, ou d'oxygène de l'air entraînant une oxydation de ce fluide. Ces différentes pollutions accélèrent le vieillissement du fluide en dégradant ses qualités, ce qui peut endommager le circuit hydraulique.

Il est connu aussi de rendre étanche les réservoirs très basse pression, pour leur appliquer une légère pressurisation par rapport à la pression atmosphérique, afin de protéger le fluide contenu dedans en évitant une entrée d'éléments extérieurs.

Toutefois cette légère pressurisation ne favorise pas l'extraction des gaz dissous dans le fluide, on peut avoir des problèmes de purge du circuit hydraulique.

On connait encore du document WO94/21891A1 et du document EP2406502B1 des circuits hydrauliques conforment au préambule de la revendication 1.

La présente invention a notamment pour but d'éviter ces inconvénients de la technique antérieure.

Elle propose à cet effet un véhicule automobile hybride comprenant un circuit hydraulique utilisé pour la traction de ce véhicule, ce circuit hydraulique comprenant un circuit basse pression alimenté par une pompe de gavage puisant dans un réservoir très basse pression, ce réservoir très basse pression étant étanche, et comportant un dispositif de mise en dépression du volume intérieur par rapport à la pression atmosphérique, remarquable en ce que le circuit hydraulique comporte un clapet anti-retour taré disposé en parallèle de la pompe de gavage, permettant un passage du fluide de l'aval vers l'amont, afin de limiter la pression de sortie à la pression nécessaire dans le circuit basse pression.

Un avantage de ce circuit hydraulique est que de manière simple et efficace, en prévoyant un réservoir étanche dans lequel le dispositif de mise en dépression maintient une très basse pression inférieure à la pression atmosphérique, on dispose d'une réserve de fluide pour la pompe de gavage dans laquelle on peut facilement extraire les gaz dissous dans le fluide grâce à la dépression de ce fluide.

Le circuit hydraulique selon l'invention peut de plus comporter une ou plusieurs des caractéristiques suivantes, qui peuvent être combinées entre elles.

Selon un mode de réalisation, le dispositif de mise en dépression du volume intérieur comporte une pompe à vide.

Selon un autre mode de réalisation, le dispositif de mise en dépression du volume intérieur comporte un clapet anti-retour relié à la pression atmosphérique, permettant uniquement un passage vers l'extérieur.

Avantageusement, le clapet anti-retour comporte un ressort de tarage.

Avantageusement, le réservoir étanche comporte initialement de l'azote remplaçant l'air.

Dans le cas où le véhicule est équipé d'un moteur thermique, le dispositif de mise en dépression du volume intérieur peut comporter une pompe à vide qui est entraînée par ce moteur thermique.

En variante, le véhicule étant équipé d'un moteur thermique comprenant un collecteur d'admission, le dispositif de mise en dépression du volume intérieur peut comporter une prise de vide sur ce collecteur d'admission.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est un schéma d'un circuit hydraulique selon l'invention, comprenant un premier moyen de mise en dépression ; et
- les figures 2a, 2b et 2c sont des schémas d'un circuit hydraulique suivant une variante comprenant un deuxième moyen de mise en dépression, présenté dans trois situations de vie successives.

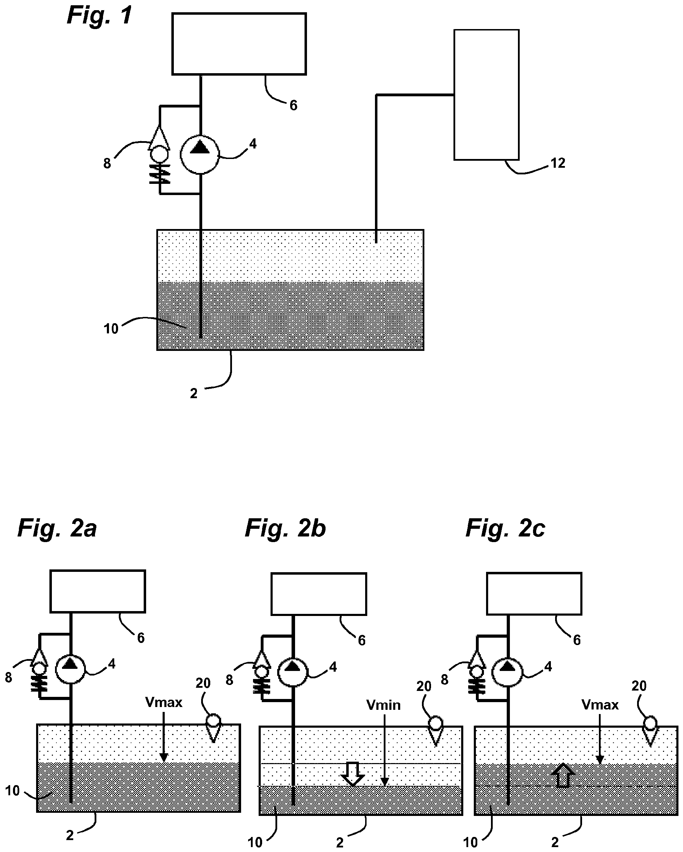

La figure 1 présente un circuit hydraulique comprenant un réservoir étanche 2 contenant un fluide 10, dans lequel puise une pompe de gavage 4 pour alimenter à une pression minimum un circuit basse pression 6. Le réservoir étanche 2 comporte les orifices non représentés, habituellement disposés pour les opérations de maintenance, comme une ouverture de remplissage et de vidange, qui sont fermés lors du fonctionnement.

La pompe de gavage 4 qui peut être entraînée par différents moyens comme un moteur électrique ou une machine hydraulique, comporte un clapet anti-retour taré 8 disposé en parallèle, permettant un passage du fluide de l'aval vers l'amont, afin de limiter sa pression de sortie à la pression nécessaire dans le circuit basse pression 6.

Le circuit hydraulique comporte une source de dépression 12 reliée au réservoir étanche 2, qui génère une pression inférieure à la pression atmosphérique afin de maintenir ce réservoir en dépression.

Pour un circuit hydraulique utilisé dans un véhicule automobile hybride, on peut en particulier utiliser la source de dépression couramment disposée dans les véhicules pour alimenter le système d'assistance du freinage à dépression. La source de dépression peut être en particulier une prise de vide sur le collecteur d'admission pour un véhicule équipé d'un moteur thermique, ou une pompe à dépression entraînée par ce moteur thermique, ou par un moteur électrique indépendant.

On notera que dans ce cas le réservoir étanche 2 qui doit être suffisamment rigide pour résister à la pression atmosphérique extérieure, constitue une réserve de vide supplémentaire reliée au système d'assistance du freinage, qui donne une autonomie plus importante à cette assistance en cas d'arrêt du fonctionnement de la source de dépression. On a ainsi une meilleure sécurité pour le système de freinage.

Le réservoir étanche 2 ne comportant pas de communication vers l'extérieur lors du fonctionnement, est ainsi à l'abri d'échanges directs avec le milieu extérieur ce qui évite des intrusions venant du milieu ambiant, notamment de particules de poussière, d'humidité ou de l'oxygène de l'air.

On préserve ainsi plus facilement la qualité du fluide contenu dans le réservoir, ce qui est favorable pour le vieillissement de ce fluide, et l'endurance des différents composants du circuit hydraulique. On assure notamment une préservation du système de filtration de ce circuit hydraulique, qui peut être renouvelé moins souvent.

De plus le système de dépression 12 réalisant fréquemment ou en permanence une aspiration des gaz dans le réservoir étanche 2, effectue en même temps une extraction des gaz dissous dans le fluide, notamment de l'air, ce qui facilite aussi la purge du circuit hydraulique.

On notera que la pompe de gavage 4 réalisant un pompage dans le fluide 10 légèrement dépressurisé, constitue un type de pompe délivrant une basse pression avec un faible débit qui est généralement auto-amorçante, avec une faible sensibilité à la cavitation.

Les figures 2a, 2b et 2c présentent un réservoir étanche 2 équipé en partie supérieure d'un clapet anti-retour 20 permettant uniquement un passage vers l'extérieur, qui est relié à la pression atmosphérique.

En particulier le clapet 20 peut comporter un ressort de tarage assurant un petit seuil de dépression dans le réservoir 2 avant son ouverture.

De cette manière on assure une meilleure étanchéité à ce clapet 20 qui ne peut s'ouvrir qu'avec un seuil de dépression. De plus on réduit la dépression dans le réservoir 2 d'une valeur égale à l'écart donné par le ressort de tarage, ce qui simplifie la fabrication du réservoir soumis à une différence de pression plus faible.

Le fonctionnement du clapet anti-retour 20 formant un dispositif de mise en dépression du réservoir 2, est le suivant.

Lors du fonctionnement du circuit hydraulique complet on a des variations du volume global de fluide dans ce circuit, comprenant notamment les variations de remplissage des différents accumulateurs de pression, ainsi que des écarts dus aux dilatations du fluide et des composants, qui se traduisent par une variation résultante du niveau du réservoir 2.

En partant d'une situation de vie où le volume du fluide dans le réservoir 2 est maximum avec une pression intérieure égale à la pression atmosphérique, donnant un niveau maximum Vmax présenté figure 2a, on a au cours du fonctionnement suivant des baisses du niveau dans ce réservoir, qui peut atteindre le niveau minimum Vmin présenté figure 2b.

On a alors pendant cette phase de diminution du volume de fluide, une absence d'entrée d'air extérieur par le clapet anti-retour 20 restant bloqué, générant en conséquence une dépression dans le réservoir 2 qui est en proportion du rapport du volume libre restant dans ce réservoir avec le niveau maximum Vmax, sur le volume libre restant avec le niveau minimum Vmin.

Par la suite lors d'une augmentation du volume de fluide dans le réservoir 2, la pression dans ce réservoir va remonter aussi tout en restant inférieure à la pression atmosphérique, ce qui maintient le clapet anti-retour 20 fermé, pour atteindre théoriquement cette pression atmosphérique si le niveau revient au niveau maximum Vmax comme présenté figure 3a. Dans le cas où cette pression atmosphérique est dépassée, alors du gaz s'échappe du clapet anti-retour 20.

On peut en pratique avoir des petits écarts dus notamment à des variations de température du fluide entraînant une dilatation différente de ce fluide et des composants, cependant le clapet anti-retour 20 fonctionnant comme une pompe à vide, maintiendra dans tous les cas une pression intérieure du réservoir qui est inférieure ou égale à la pression atmosphérique.

On a de la même manière un dégazage optimal du fluide avec la dépression.

En complément avec les deux versions du dispositif de mise en dépression, on peut remplir initialement le réservoir fermé 2 d'azote pour remplacer l'air, ce qui évite une oxydation du fluide.

## Revendications

1. Véhicule automobile hybride comprenant un circuit hydraulique utilisé pour la traction de ce véhicule, ce circuit hydraulique comprenant un circuit basse pression (6) alimenté par une pompe de gavage (4) puisant dans un réservoir très basse pression (2), ce réservoir très basse pression (2) étant étanche, et comportant un dispositif de mise en dépression du volume intérieur (12, 20) par rapport à la pression atmosphérique, **caractérisé en ce que** le circuit hydraulique comporte un clapet anti-retour taré (8) disposé en parallèle de la pompe de gavage (4), permettant un passage du fluide de l'aval vers l'amont, afin de limiter la pression de sortie à la pression nécessaire dans le circuit basse pression (6).

2. Véhicule selon la revendication 1, **caractérisé en ce que** le dispositif de mise en dépression du volume intérieur (12) comporte une pompe à vide.

3. Véhicule selon la revendication 1 ou 2, **caractérisé en ce que** le dispositif de mise en dépression du volume intérieur (12) comporte un clapet anti-retour (20) relié à la pression atmosphérique, permettant uniquement un passage vers l'extérieur.

4. Véhicule selon la revendication 3, **caractérisé en ce que** le clapet anti-retour (20) comporte un ressort de tarage.

5. Véhicule selon l'une quelconque des revendications précédentes, **caractérisé en ce que** le réservoir étanche (2) comporte initialement de l'azote remplaçant l'air.

6. Véhicule automobile hybride selon l'une des revendications 1 à 5, **caractérisé en ce que** le véhicule étant équipé d'un moteur thermique, le dispositif de mise en dépression du volume intérieur (12) comporte une pompe à vide qui est entraînée par ce moteur thermique.

7. Véhicule automobile hybride selon l'une des revendications 1 à 5, **caractérisé en ce que** le véhicule étant équipé d'un moteur thermique comprenant un collecteur d'admission, le dispositif de mise en dépression du volume intérieur (12) comporte une prise de vide sur ce collecteur d'admission.

## Patentansprüche

1. Hybridkraftfahrzeug mit einem Hydraulikkreislauf, der für die Traktion dieses Fahrzeugs verwendet wird, wobei dieser Hydraulikkreislauf einen Niederdruckkreislauf (6) umfasst, der von einer Druckerhöhungspumpe (4) gespeist wird, die aus einem sehr Niederdrucktank (2), diesem sehr Niederdrucktank, gezogen wird Der Druck (2) wird abgedichtet und umfasst eine Vorrichtung zum Druckabbau des Innenvolumens (12, 20) relativ zum atmosphärischen Druck, die **dadurch gekennzeichnet ist, dass** der Hydraulikkreislauf ein kalibriertes Rückschlagventil (8) umfasst, das parallel angeordnet ist der Druckerhöhungspumpe (4), wodurch ein Durchgang des Fluids von stromabwärts nach stromaufwärts ermöglicht wird, um den Ausgangsdruck auf den im Niederdruckkreislauf (6) erforderlichen Druck zu begrenzen.

2. Fahrzeug nach Anspruch 1, **dadurch gekennzeichnet, dass** die Vorrichtung zum Druckabbau des Innenvolumens (12) eine Vakuumpumpe umfasst.

3. Fahrzeug nach Anspruch 1 oder 2, **dadurch gekennzeichnet, dass** die Vorrichtung zum Druckentlasten des Innenvolumens (12) ein Rückschlagventil (20) umfasst, das mit Atmosphärendruck verbunden ist und nur einen Durchgang nach außen zulässt.

4. Fahrzeug nach Anspruch 3, **dadurch gekennzeichnet, dass** das Rückschlagventil (20) eine Kalibrierfeder aufweist.

5. Fahrzeug nach einem der vorhergehenden Ansprüche, **dadurch gekennzeichnet, dass** der abgedichtete Tank (2) anfänglich Stickstoff enthält, der die Luft ersetzt.

6. Hybridkraftfahrzeug nach einem der Ansprüche 1 bis 5, **dadurch gekennzeichnet, dass** das Fahrzeug mit einer Wärmekraftmaschine ausgestattet ist und die Vorrichtung zum Druckentlastungsvolumen (12) eine Vakuumpumpe umfasst, die von diesem Motor angetrieben wird Thermal.

7. Hybridkraftfahrzeug nach einem der Ansprüche 1 bis 5, **dadurch gekennzeichnet, dass** das Fahrzeug mit einer Wärmekraftmaschine ausgestattet ist, die einen Ansaugkrümmer umfasst, wobei die Vorrichtung zum Entspannen des Innenvolumens (12) einen Vakuumauslass umfasst an diesem Ansaugkrümmer.

## Claims

1. Hybrid motor vehicle comprising a hydraulic circuit used for the traction of this vehicle, this hydraulic circuit comprising a low pressure circuit (6) supplied by a booster pump (4) drawing from a very low pressure tank (2), this very low tank pressure (2) being sealed, and comprising a device for depressurizing the internal volume (12, 20) relative to atmospheric pressure, **characterized in that** the hydraulic circuit comprises a calibrated non-return valve (8) arranged in parallel of the booster pump (4), allowing a passage of the fluid from downstream to upstream, in order to limit the outlet pressure to the pressure required in the low pressure circuit (6).

2. Vehicle according to claim 1, **characterized in that** the device for depressurizing the interior volume (12) comprises a vacuum pump.

3. Vehicle according to claim 1 or 2, **characterized in that** the device for depressurizing the interior volume (12) comprises a non-return valve (20) connected to atmospheric pressure, allowing only passage to the outside.

4. Vehicle according to claim 3, **characterized in that** the non-return valve (20) comprises a calibration spring.

5. Vehicle according to any one of the preceding claims, **characterized in that** the sealed tank (2) initially comprises nitrogen replacing the air.

6. Hybrid motor vehicle according to one of claims 1 to 5, **characterized in that** the vehicle being equipped with a heat engine, the device for depressurizing the interior volume (12) comprises a vacuum pump which is driven by this engine thermal.

7. Hybrid motor vehicle according to one of claims 1 to 5, **characterized in that** the vehicle being equipped with a heat engine comprising an intake manifold, the device for depressurizing the interior volume (12) comprises a vacuum outlet on this intake manifold.
